# EUROPÄISCHE PATENTSCHRIFT

(11) **EP 3 790 759 B1**
(45) Veröffentlichungstag und Bekanntmachung des Hinweises auf die Patenterteilung: **15.03.2023**
(21) Anmeldenummer: 19761774.9
(22) Anmeldetag: 19.08.2019
(51) Int. Cl.: B60L 5/26, B60L 5/36, B60L 5/32

(54) **STROMABNEHMER FÜR EIN NICHT SCHIENENGEBUNDENES, ELEKTRISCHES TRIEBFAHRZEUG, TRIEBFAHRZEUG MIT EINEM SOLCHEN STROMABNEHMER UND VERFAHREN ZUM BETREIBEN EINES SOLCHEN STROMABNEHMERS**
CURRENT COLLECTOR FOR A NON-RAIL-BOUND, ELECTRIC TRACTION VEHICLE, TRACTION VEHICLE HAVING A CURRENT COLLECTOR OF THIS TYPE AND METHOD FOR OPERATING A CURRENT COLLECTOR OF THIS TYPE
COLLECTEUR DE COURANT POUR VÉHICULE TRACTEUR ÉLECTRIQUE NON FERROVIAIRE, VÉHICULE TRACTEUR MUNI D'UN TEL COLLECTEUR DE COURANT, ET PROCÉDÉ PERMETTANT DE FAIRE FONCTIONNER UN TEL COLLECTEUR DE COURANT

(30) Priorität: 31.08.2018 DE 102018214873
(43) Veröffentlichungstag der Anmeldung: 17.03.2021
(73) Patentinhaber: Siemens Mobility GmbH, 81739 München (DE)
(72) Erfinder: BLASE, Bastian, 13187 Berlin (DE); BÜHS, Florian, 10777 Berlin (DE); JAKOBI, Steffen, 12524 Berlin (DE); KILIAN, Lennart, 82131 Gauting (DE); KRÜGER, Stephan, 12658 Berlin (DE); TOLKSDORF, Andre, 12555 Berlin (DE)
(74) Vertreter: Siemens Patent Attorneys
(86) Internationale Anmeldenummer: PCT/EP2019/072094
(87) Internationale Veröffentlichungsnummer: WO 2020/043523

(56) Entgegenhaltungen:
- CN-A- 102 431 458
- DE-A1-102015 005 843
- DE-A1-102017 203 046

## Beschreibung

Die Erfindung betrifft einen Stromabnehmer für ein nicht schienengebundenes, elektrisches Triebfahrzeug nach dem Oberbegriff des Patentanspruches 1. Zudem betrifft die Erfindung ein Triebfahrzeug mit einem solchen Stromabnehmer. Ferner betrifft die Erfindung ein Verfahren zum Betreiben eines solchen Stromabnehmers.

Für den Transport von Gütern oder die Beförderung von Personen sind elektrische Triebfahrzeuge mit Stromabnehmern zur Traktionsversorgung aus einer streckenseitigen Oberleitungsanlage im schienengebundenen Eisenbahnverkehr hinlänglich bekannt. Seit geraumer Zeit sind aber auch nicht schienengebundene Triebfahrzeuge, insbesondere Lastkraftwagen, mit dieselelektrischem Antrieb und mit Stromabnehmern zur Einspeisung elektrischer Energie aus einer Oberleitungsanlage bekannt. Aufgrund der Gummibereifung derartiger Straßenfahrzeuge sind elektrifizierte Fahrstreifen mit einer zweipoligen Oberleitungsanlage erforderlich, die als Hin- und Rückleiter ausgebildete Fahrdrähte über diesem Fahrstreifen aufspannen. Entsprechend muss auch der Stromabnehmer zweipolig ausgebildet sein. Ein solcher Stromabnehmer ist aus der älteren deutschen Patentanmeldung mit dem amtlichen Aktenzeichen 102017203046.1 bekannt.

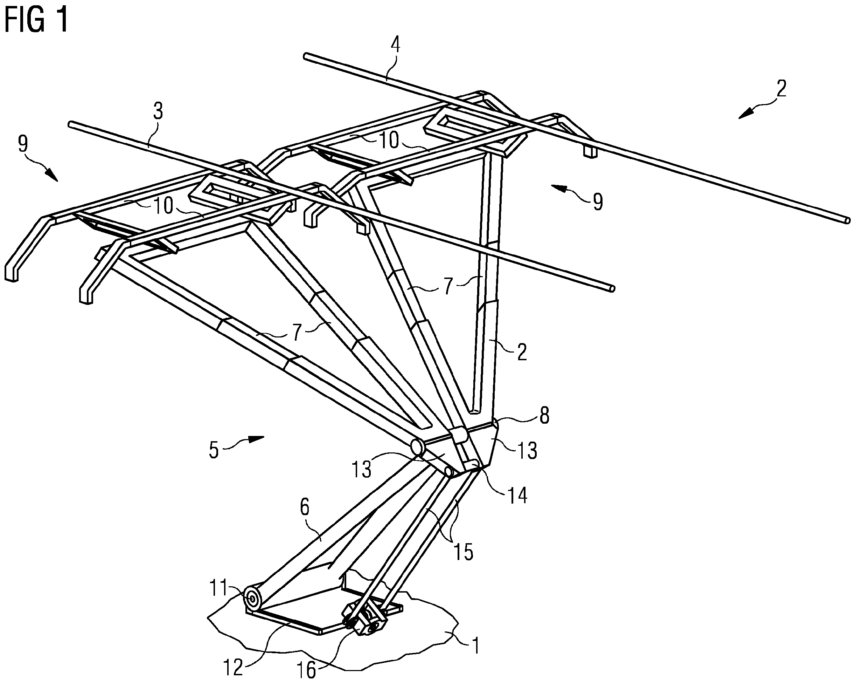

Gegenüber dem schienengebundenen Eisenbahnverkehr müssen sich nicht schienengebundene Straßenfahrzeuge die Fahrbahn, die neben einem elektrifizierten auch nicht elektrifizierten Fahrstreifen aufweisen kann, mit herkömmlichen Kraftfahrzeugen ohne Stromabnehmer teilen. Solche Straßenfahrzeuge müssen auch sicher in Fahrbahnen mit elektrifizierten Fahrstreifen einfahren und diese verlassen sowie zwischen elektrifizierten und nicht elektrifizierten Fahrstreifen wechseln können, etwa für Überhol- oder Ausweichmanöver. Es kommt daher beim Betrieb eines solchen Triebfahrzeugs auf Straßen planmäßig aber auch überraschend zu Fahrsituationen, in denen der Stromabnehmer abgebügelt werden muss. Bei dem bekannten Stromabnehmer, der in FIG 1 näher beschrieben ist, wird die Druckluft während des Absenkens der Wippenanordnungen mit annähernd konstantem Volumenstrom in die Umgebung freigelassen. Damit der Stromabnehmer in seiner unteren Parkposition nicht mit zu hoher Geschwindigkeit aufprallt, was die Gefahr von Beschädigungen in sich birgt, wird durch den Strömungsquerschnitt im Abluftweg eine moderate Sinkgeschwindigkeit eingestellt. Andererseits besteht beispielsweise bei plötzlichen Fahrmanövern mit einem Wechsel des elektrifizierten Fahrstreifens das Erfordernis eines raschen Absenkens der Wippenanordnungen, damit eine Havarie zwischen Stromabnehmer und Fahrdrähten der Oberleitungsanlage vermieden wird.

Der Erfindung liegt daher die Aufgabe zugrunde, einen Stromabnehmer der eingangs genannten Art sowie ein Verfahren zum Betreiben eines solchen Stromabnehmers bereitzustellen, mit dem die Wippenanordnungen zum Abbügeln des Stromabnehmers schnell abgesenkt und trotzdem ohne Beschädigungen in ihre Parkposition verbracht werden können.

Diese Aufgabe wird durch einen Stromabnehmer gemäß Patentanspruch 1 und durch ein Verfahren zum Betreiben eines solchen Stromabnehmers gemäß Patentanspruch 3 gelöst.

Der Stromabnehmer für ein nicht schienengebundenes, elektrisches Triebfahrzeug ist zur Einspeisung elektrischer Energie aus einer zweipoligen Oberleitungsanlage mit als Hin- und Rückleiter ausgebildeten Fahrdrähten vorgesehen. Er umfasst ein gelenkiges Traggestänge, das fahrdrahtseitig Wippenanordnungen mit Schleifleisten trägt und fahrzeugseitig ein Basisgelenk zur Anlenkung an das Triebfahrzeug aufweist. Der Stromabnehmer umfasst ferner einen pneumatischen Hubantrieb, der derart mit dem Traggestänge gekoppelt ist, dass die Wippenanordnungen bei Druckbeaufschlagung des Hubantriebs aus einer unteren Parkposition in einer obere Kontaktposition anhebbar und bei Druckentlastung eigengewichtgetrieben in die Parkposition absenkbar sind. Erfindungsgemäß ist der Hubantrieb zum Absenken der Wippenanordnungen über eine Abluftleitung mit der Umgebung verbindbar. Dabei sind zwischen dem Hubantrieb und einer Umgebungsmündung der Abluftleitung ein Luftspeicher und ein diesem nachgeordnetes Drosselventil geschaltet. Das Speichervolumen des Luftspeichers ist kleiner als ein Arbeitsvolumen des Hubantriebs bemessen. Dadurch wird erreicht, dass beim Absenken der Wippenanordnungen die Zwischenposition knapp oberhalb der Parkposition liegt, so dass der Absenkweg während der Schnellabsenkphase mit höherer Sinkgeschwindigkeit in kurzer Zeit zurückgelegt wird. Während der Parkabsenkphase ist der Abluftstrom durch das Drosselventil und damit die Sinkgeschwindigkeit der Wippenanordnungen gemindert. Hierdurch fährt der Stromabnehmer langsam und sicher in Richtung untere Parkposition und erreicht diese ohne starken Aufprall. Zur Verbindung des Hubantriebs mit der Umgebung ist in der Abluftleitung ein Zwei-Wege-Ventil angeordnet, welches elektrisch betätigbar sein kann. Im betätigten Zustand gibt das Zwei-Wege-Ventil einen Zuluftweg von einer Druckluftversorgung zum Hubantrieb frei, um den Stromabnehmer aufzurichten beziehungsweise um den angebügelten Stromabnehmer mit der erforderlichen Andruckkraft gegen die Fahrdrähte zu drücken. Erhält das Zwei-Wege-Ventil ein Steuersignal zum Abbügeln oder wird es aufgrund eines Fehlers stromlos, so schaltet eine Federkraft das Ventil in den nicht betätigten Zustand, in welchem es einen Abluftweg vom Hubantrieb zum Luftspeicher freigibt. Ebenso könnte der Zuluftweg im betätigten Zustand freigeschaltet werden und der Abluftweg im nicht betätigten Zustand.

Das Absenken der Wippenanordnungen erfolgt erfindungsgemäß zweistufig: In einer ersten Schnellabsenkphase werden die Wippenanordnungen aus der Kontaktposition in eine Zwischenposition und in einer zweiten Parkabsenkphase aus der Zwischenposition in die Parkposition abgesenkt. Während der Schnellabsenkphase strömt durch das Eigengewicht der Wippenanordnungen getriebene Abluft aus dem Hubantrieb in den Luftspeicher mit einem ersten Volumenstrom, wohingegen während der Parkabsenkphase Abluft aus dem gefüllten Luftspeicher durch das Drosselventil mit einem gegenüber dem ersten Volumenstrom gedrosselten, zweiten Volumenstrom strömt.

Weitere Eigenschaften und Vorteile der Erfindung ergeben sich aus nachfolgender Beschreibung eines Ausführungsbeispiels anhand der Zeichnungen, in deren
- FIG 1: ein bekannter Stromabnehmer in perspektivischer Ansicht,
- FIG 2: ein Schaltbild einer pneumatischen Schaltung für den Betrieb des Stromabnehmers und
- FIG 3: ein Weg-Zeit-Diagramm der Wippenanordnung bei deren Absenken

### schematisch veranschaulicht sind.

Gemäß FIG 1 umfasst ein nicht schienengebundenes, elektrisches Triebfahrzeug 1, insbesondere ein Straßenfahrzeug mit dieselelektrischem Antrieb, wie etwa ein Lastkraftwagen oder Bus, einen Stromabnehmer 2, über den auch während der Fahrt elektrische Energie aus einer Oberleitungsanlage einspeisbar ist. Die Oberleitungsanlage ist zweipolig ausgebildet und umfasst über einer Fahrbahn verlaufende, als Hin- und Rückleiter ausgebildete Fahrdrähte 3, 4 zur Bereitstellung elektrischer Energie. Der Stromabnehmer 2 ist als Halbscherenpantograph ausgebildet und umfasst ein gelenkiges Traggestänge 5 mit einem Unterarm 6 und zwei Oberarmen 7, die jeweils über eine am Unterarm 6 angeordnete Achse 8 schwenkbar mit diesem verbunden sind. Jeder der beiden Oberarme 7 trägt fahrdrahtseitig eine Wippenanordnung 9 mit zwei parallelen Schleifleisten 10, die quer zu einer Fahrzeuglängsachse hintereinander angeordnet sind. Zur Anlenkung des Stromabnehmers 2 an das Triebfahrzeug 1 ist der Unterarm 6 fahrzeugseitig über ein Basisgelenk 11 mit einer Basisplatte 12 schwenkbar verbunden. Die Basisplatte 12 kann zum Beispiel auf dem Dach des Triebfahrzeugs 1 montiert sein, welches in FIG 1 abschnittsweise dargestellt ist. Die beiden Oberarme 7 weisen jeweils ein über die Achse 8 hinausragendes Endstück 13 auf, durch welche sich eine gemeinsame Achse 14 erstreckt. Über die Achse 14 ist je eine Zugstange 15 mit je einem der Endstücke 13 der Oberarme 7 gelenkig verbunden. Zudem sind die beiden Zugstangen 15 über ein Kreuzlager 16 mit der Basisplatte 12 gelenkig verbunden.

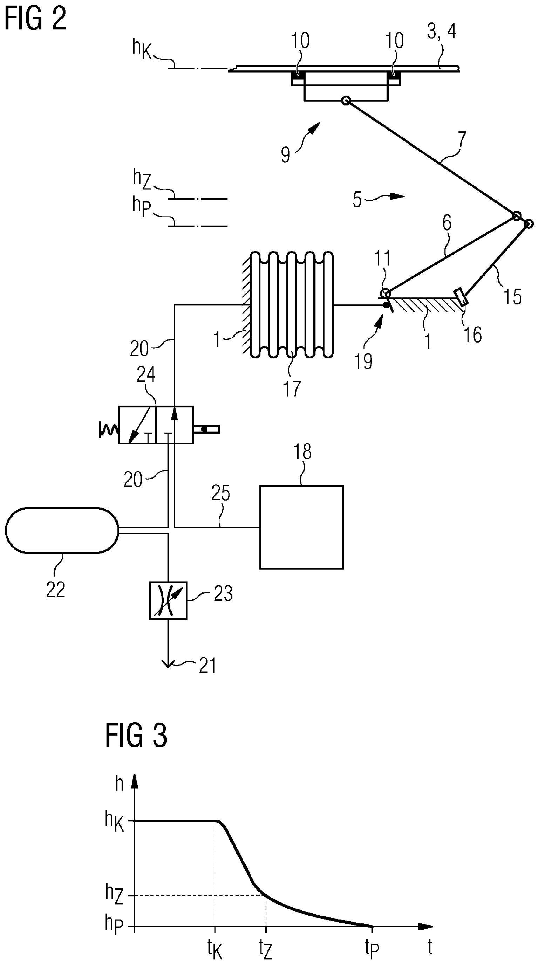

Mit dem Traggestänge 5 ist gemäß FIG 2 ein pneumatischer Hubantrieb 17 in Form eines Luftfederbalgs so gekoppelt, dass die Wippenanordnung 9 bei Druckbeaufschlagung des Hubantriebs 17 aus einer unteren Parkposition h_{P} in eine obere Kontakt-position h_{K} anhebbar ist. Die Druckbeaufschlagung wird durch eine Druckluftversorgung 18 bewerkstelligt, zu der - nicht näher dargestellt - ein Kompressor, ein Druckluftbehälter, ein Öl-/ Wasserabscheider und eine Druckregeleinrichtung gehören können. Geeignete mechanische Koppelmittel 19 wandeln eine lineare Stellkraft des Hubantriebs 17 in ein Drehmoment des Unterarms 6 im Basisgelenk 11 um. In der Parkposition h_{P} ist das Traggestänge 5 des abgebügelten Stromabnehmers 2 zusammengeklappt, so dass das Triebfahrzeug 1 die für einen Betrieb außerhalb elektrifizierter Fahrstrecken einzuhaltende, zulässige Gesamtfahrzeughöhe nicht überschreitet und der Stromabnehmer 2 sich in einem elektrisch gesicherten Zustand befindet. Ein Abbügeln des Stromabnehmers 2 ist auch vor einem gesicherten Wechsel des Triebfahrzeugs 1 auf einen nicht elektrifizierten Fahrstreifen, etwa bei Überholmanövern, erforderlich. Beim Anbügeln des Stromabnehmers 2 erzwingen die Zugstangen 15 ein Aufrichten der Oberarme 7, wenn der Unterarm 6 aufgerichtet wird. In der Kontaktposition h_{K} werden die Schleifleisten 10 der Wippenanordnungen 9 an je einen der Fahrdrähte 3, 4 der Oberleitungsanlage gedrückt, so dass sowohl im Stand als auch während der Fahrt Energie aus der Oberleitungsanlage in das Triebfahrzeug 1 übertragen werden kann. Um die Wippenanordnungen 9 aus der Kontakt-position h_{K} in die Parkposition h_{P} zu überführen, erfolgt eine Druckentlastung des Hubantriebs 17, so dass durch ihr Eigengewicht getrieben die Wippenanordnungen 9 sinken und das Traggestänge 5 zusammenklappt. Dabei entweicht Druckluft aus dem Hubantrieb 17 über eine Abluftleitung 20 in die Umgebung.

Erfindungsgemäß ist zwischen dem Hubantrieb 17 und einer Umgebungsmündung 21 der Abluftleitung 20 ein Luftspeicher 22 und ein diesem nachgeordnetes Drosselventil 23 geschaltet. Ein Speichervolumen des Luftspeichers 22 ist dabei vorzugsweise kleiner als ein Arbeitsvolumen des Hubantriebs 17 bemessen. Zwischen dem Hubantrieb 17 und dem Luftspeicher 22 ist in der Abluftleitung 20 ein elektrisch betätigbares Zwei-Wege-Ventil 24 angeordnet, an dem auch eine von der Druckluftversorgung 18 kommende Zuluftleitung 25 angeschlossen ist. Im betätigten Zustand des Zwei-Wege-Ventils 24 besteht eine pneumatische Verbindung zwischen der Druckluftversorgung 18 und dem Hubantrieb 17, so dass der Stromabnehmer 2 angebügelt oder im angebügelten Zustand eine Anpresskraft der Schleifleisten 10 an die Fahrdrähte 3, 4 geregelt werden kann. In diesem Zustand wird der zwischen Zwei-Wege-Ventil 24 und Hubantrieb 17 verlaufende Abschnitt der Abluftleitung 20 als Zuluftleitung genutzt. Im elektrisch nicht betätigten Zustand gibt das Zwei-Wege-Ventil 24 eine pneumatische Verbindung zwischen Hubantrieb 17 und Luftspeicher 22 frei, während der Anschluss der Zuluftleitung 25 gesperrt ist. Dieser Zustand wird auch eingenommen, wenn das Zwei-Wege-Ventil 24 aufgrund eines Fehlers stromlos wird, damit im Fehlerfall ein automatisches Absenken des Stromabnehmers 2 eingeleitet wird.

Bei Beendigung der Betätigung des Zwei-Wege-Ventils 24 zu einem Zeitpunkt t_{K}, zu dem sich die Wippenanordnungen 9 gemäß FIG 3 in ihrer oberen Kontaktposition h_{K} befinden, wird der Hubantrieb 17 druckentastet und die in seinem Arbeitsvolumen befindliche Druckluft entweicht durch das Eigengewicht der Wippenanordnungen 9 getrieben in den Luftspeicher 22, bis dieser gefüllt ist. Ist das Speichervolumen des Luftspeichers 22 kleiner bemessen als das Arbeitsvolumen des Hubantriebs 17, nehmen die abgesunkenen Wippenanordnungen 9 zu diesem Zeitpunkt t_{Z} eine Zwischenposition h_{Z} ein, die nur gering oberhalb der Parkposition h_{P} liegt. Ab dem Zeitpunkt t_{Z} ist der Abluftstrom - weiter eigengewichtgetrieben - aus dem Luftspeicher 22 in die Umgebung durch den Querschnitt des nachgeschalteten Drosselventils 23 reduziert, bis die Wippenanordnungen 9 zum Zeitpunkt t_{P} ihre untere Parkposition h_{P} erreicht haben.

Das Absenken der Wippenanordnungen 9 erfolgt erfindungsgemäß zweistufig in einer ersten Schnellabsenkphase der Dauer t_{K}-t_{Z} und einer zweiten Parkabsenkphase der Dauer t_{P}-t_{Z}. Während der Schnellabsenkphase strömt die Luft aus dem Hubantrieb 17 in den Luftspeicher 22 mit einem ersten Volumenstrom, der hauptsächlich durch Leitungsquerschnitte der Abluftleitung 20 bestimmt ist, wohingegen während der Parkabsenkphase Luft aus dem Luftspeicher 22 mit einem zweiten Volumenstrom in die Umgebung strömt. Der zweite Volumenstrom ist durch den geringen, einstellbaren Querschnitt des Drosselventils 23 gegenüber dem ersten Volumenstrom gedrosselt, sodass die Sinkgeschwindigkeit der Wippenanordnungen 9 in der Parkabsenkphase kleiner ist als während der Schnellabsenkphase. Hierdurch wird erreicht, dass bei Beendigung der Betätigung des Zwei-Wege-Ventils 24 die Wippenanordnungen 9 in vergleichsweise kurzer Dauer t_{Z}-t_{K} einen vergleichsweise großen Absenkweg h_{K}-h_{Z} bis in die Zwischenposition h_{Z} zurücklegen, um schnell Abstand von den Fahrdrähten 3, 4 der Oberleitungsanlage zu gewinnen. Des Weiteren wird erreicht, dass die Wippenanordnungen 9 den restlichen Absenkweg h_{Z}-h_{P} langsam zurücklegen, damit der Stromabnehmer 2 sanft in seine Parkposition h_{P} fährt, ohne großen mechanischen Aufprallbelastungen ausgesetzt zu sein. Mit Vorteil wird dies erfindungsgemäß ohne den Einsatz kostenaufwendiger regelbarer Drosselventile erreicht.

## Patentansprüche

1. Stromabnehmer (2) für ein nicht schienengebundenes, elektrisches Triebfahrzeug (1) zur Einspeisung elektrischer Energie aus einer zweipoligen Oberleitungsanlage mit als Hin- und Rückleiter gebildeten Fahrdrähten (3, 4), umfassend
- ein gelenkiges Traggestänge (5), das fahrdrahtseitig Wippenanordnungen (9) mit Schleifleisten (10) trägt und fahrzeugseitig ein Basisgelenk (11) zur Anlenkung an das Triebfahrzeug (1) aufweist, und
- einen pneumatischen Hubantrieb (17), der derart mit dem Traggestänge (5) gekoppelt ist, dass die Wippenanordnungen (9) bei Druckbeaufschlagung des Hubantriebs (17) aus einer unteren Parkposition (h_{P}) in eine obere Kontaktposition (h_{K}) anhebbar und bei Druckentlastung eigengewichtgetrieben in die Parkposition (h_{P}) absenkbar sind,
**dadurch gekennzeichnet,**
- **dass** der Hubantrieb (17) zum Absenken der Wippenanordnungen (9) über eine Abluftleitung (20) mit der Umgebung verbindbar ist,
- wobei zwischen dem Hubantrieb (17) und einer Umgebungsmündung (21) der Abluftleitung (20) ein Luftspeicher (22) und ein diesem nachgeordnetes Drosselventil (23) geschaltet sind, und
- wobei ein Speichervolumen des Luftspeichers (22) geringer bemessen ist als das Arbeitsvolumen des Hubantriebs (17).

2. Nicht schienengebundenes, elektrisches Triebfahrzeug (1) mit einem Stromabnehmer (2) nach Anspruch 1.

3. Verfahren zum Betreiben eines Stromabnehmers (2) nach Anspruch 1,
- wobei die Wippenanordnungen (9) zweistufig in einer ersten Schnellabsenkphase aus der Kontaktposition (h_{K}) in eine Zwischenposition (h_{Z}) und in einer zweiten Parkabsenkphase aus der Zwischenposition (h_{Z}) in die Parkposition (h_{P}) abgesenkt wird,
- wobei durch das Eigengewicht der Wippenanordnungen (9) getriebene Abluft während der Schnellabsenkphase aus dem Hubantrieb (17) in den Luftspeicher (22) mit einem ersten Volumenstrom und während der Endabsenkphase aus dem gefüllten Luftspeicher (22) durch das Drosselventil (23) mit einem gegenüber dem ersten Volumenstrom gedrosselten, zweiten Volumenstrom strömt.

## Claims

1. Current collector (2) for a non-rail-bound, electric traction vehicle (1) for feeding electrical energy from a two-pole overhead line system with contact wires (3, 4) embodied as forward and return conductors, comprising
- an articulated support linkage (5), which, on the contact wire side, supports rocker assemblies (9) having contact strips (10) and, on the vehicle side, has a base joint (11) for articulation to the traction vehicle (1), and
- a pneumatic reciprocating drive (17), which is coupled to the support linkage (5) such that the rocker assemblies (9) can be raised from a lower parking position (h_{P}) into an upper contact position (h_{K}) when the reciprocating drive (17) is pressurised and can be lowered into the parking position (h_{P}) under their own weight when depressurisation occurs,
**characterised in that**
- the reciprocating drive (17) can be connected to the environment by means of an exhaust air line (20) in order to lower the rocker assemblies (9),
- wherein an air accumulator (22) and a throttle valve (23) arranged downstream thereof are connected between the reciprocating drive (17) and an environment opening (21) of the exhaust air line (20), and
- wherein a storage capacity of the air accumulator (22) is dimensioned to be less than the operating volume of the reciprocating drive (17).

2. Non-rail-bound, electric traction vehicle (1) having a current collector (2) according to claim 1.

3. Method for operating a current collector (2) according to claim 1,
- wherein the rocker assemblies (9) are lowered in two stages in a first fast lowering phase from the contact position (h_{K}) into an intermediate position (h_{Z}) and in a second parking lowering phase from the intermediate position (h_{Z}) into the parking position (h_{P}),
- wherein during the fast lowering phase exhaust air flows out of the reciprocating drive (17) under the own weight of the rocker assemblies (9) into the air accumulator (22) with a first volume flow and during the final lowering phase flows out of the filled air accumulator (22) through the throttle valve (23) with a second volume flow which is restricted compared to the first volume flow.

## Revendications

1. Appareil (2) de prise de courant d'une motrice (1) électrique non guidée sur rail pour l'injection d'énergie électrique à partir d'une installation bipolaire à ligne de contact ayant des fils (3, 4) de contact formés en ligne aller et en ligne retour, comprenant
- une tringle (5) support articulée, qui porte, du côté du fil de contact, des agencements (9) d'archet ayant des baguettes (10) de frottement et qui a du côté du véhicule une articulation (11) de base pour l'articulation sur la motrice (1), et
- un entraînement (17) pneumatique de levage, qui est accouplé à la tringle (5) de support, de manière à ce que les agencements (9) d'archet puisse, lorsque l'entraînement (17) de levage est alimenté en pression, être soulevé d'une position (h_{P}) inférieure de stationnement à une position (h_{K}) supérieure de contact et puissent, à la détente de pression, être abaissés en étant entraînés par leur poids propre dans la positon (h_{P}) de stationnement,
**caractérisé**
- **en ce que** l'entraînement (17) de levage peut, pour l'abaissement des agencements (9) d'archet, communiquer avec l'atmosphère ambiante par un conduit (20) d'évacuation de l'air,
- dans lequel un accumulateur (22) d'air est monté entre l'entraînement (17) de levage et une embouchure (21) vers l'atmosphère ambiante du conduit (20) d'évacuation de l'air et une vanne (23) d'étranglement est montée en aval de cet accumulateur, et
- dans lequel un volume d'accumulation de l'accumulateur (22) d'air est plus petit que le volume de travail de l'entraînement (17) de levage.

2. Motrice (1) électrique non guidée sur rail comprenant ayant un appareil (2) de prise de courant suivant la revendication 1.

3. Procédé pour faire fonctionner un appareil (2) de prise de courant suivant la revendication 1,
- dans lequel on abaisse les agencements (9) d'archet en deux stades, dans une première phase d'abaissement rapide de la position (h_{K}) de contact à une position (h_{Z}) intermédiaire, et dans une phase d'abaissement de stationnement, de la position (h_{Z}) intermédiaire à la position (h_{P}) de stationnement,
- dans lequel, par le poids propre des agencements (9) d'archet, de l'air d'évacuation entraîné pendant la phase d'abaissement rapide passe de l'entraînement (17) de levage à l'accumulateur (22) d'air en ayant un premier courant en volume et passe, pendant la phase d'abaissement finale, de l'accumulateur (22) d'air rempli en passant par la vanne (23) d'étranglement en ayant un deuxième courant en volume étranglé par rapport au premier courant en volume.
